# EUROPÄISCHE PATENTSCHRIFT

(11) **EP 1 992 855 B1**
(45) Veröffentlichungstag und Bekanntmachung des Hinweises auf die Patenterteilung: **21.09.2011**
(21) Anmeldenummer: 08155247.3
(22) Anmeldetag: 28.04.2008
(51) Int. Cl.: F16K 31/06

(54) **Elektromagnetisches Schaltventil**
Electromagnetic switching valve
Appareil de commutation électromagnétique

(30) Priorität: 18.05.2007 DE 102007023363
(43) Veröffentlichungstag der Anmeldung: 19.11.2008
(73) Patentinhaber: Schaeffler Technologies GmbH & Co. KG, 91074 Herzogenaurach (DE)
(72) Erfinder: Goraj, Robert, 91052 Erlangen (DE)

(56) Entgegenhaltungen:
- EP-A- 1 607 988
- WO-A-2004/072566
- DE-A1- 2 329 639
- DE-A1- 10 322 904
- DE-A1- 19 504 185
- DE-A1-102005 051 177

## Beschreibung

### Gebiet der Erfindung

Die Erfindung betrifft ein elektromagnetisches Schaltventil mit einem von einer Hülse umgebenen Ankerraum, mit einem im Ankerraum mittels eines radialen Spiels angeordneten beweglichen Magnetanker mit kreiszylindrischem Querschnitt, der mit einem Elektromagneten in Wirkverbindung steht und mittels eines Stößels mit einem in einem Ventilraum angeordneten Ventilkörper verbunden ist, und mit einer Druckfeder, deren Kraft den Ventilkörper in Schließstellung belastet, wobei im Magnetanker verteilt mehrere exzentrisch angeordnete Kanäle vorgesehen sind, die den Magnetanker durchdringen.

### Hintergrund der Erfindung

Ein elektromagnetisches Schaltventil ist aus dem Dokument DE 197 13 858 A1 bekannt. Durch die radiale magnetische Kraft des Elektromagneten ergibt sich dort eine exzentrische Belastung auf den Magnetanker, wodurch die Reibung zwischen Magnetanker und Hülse beeinflusst wird, in deren Folge verlängerte Schaltzeiten auftreten können. Die radiale magnetische Kraft kann durch Veränderung der Hülsendicke, deren Permeabilität sehr groß ist und der von Luft ähnelt, variiert werden. Wird die Hülsendicke vergrößert, so verkleinert sich umgekehrt die auf den Magnetanker wirkende magnetische Kraft, wodurch die Schaltzeiten wieder verlängert werden. Aufgrund dieses Dilemmas versucht man, die Schaltzeiten dadurch zu minimieren, dass man den Spalt zwischen dem Magnetanker und der Hülse variiert. Zwar führt ein großer Spalt zu geringen Reibkräften, hat aber den Nachteil, dass bei einem großen Spalt der magnetische Widerstand ebenfalls groß wird.

Bei dem bekannten elektromagnetischen Schaltventil wird der Magnetanker durch eine Lagerbüchse im Polkern einerseits und durch eine Lagerbüchse im Bereich des Ventilgehäuses geführt. Zur Verdrängung des Mediums auf beiden Seiten des Magnetankers ist der exzentrisch angeordnete Kanal vorgesehen. Das bekannte elektromagnetische Schaltventil ist nicht geeignet, kurze Schaltzeiten, auch innerhalb eines großen Temperaturbereichs von ca. - 30 ° bis + 100 °C, zu erzeugen.

Aus dem Dokument DE 23 29 639 A1 ist ein Ventil der eingangs genannten Art bekannt, bei welchem der Magnetanker offenbar eine rein kreiszylindrische Umfangsfläche aufweist. Während des Schaltvorganges muss daher bei der axialen Bewegung des Ankers längs der inneren Oberfläche des Gehäuses, in welchem er sich befindet, mit einer Führungsreibung gerechnet werden.

Das Dokument DE 10 2005 051 177 A1 offenbart eine ähnlich aufgebaute elektromagnetische Stelleinheit, bei welcher ein Polstück mit zylindrischer Innenwand eine Ankerführung für einen Anker bildet. Diese ist innerhalb eines Magnetgehäuses angeordnet. Der Anker weist an seiner Umfangsfläche parallel zur Mittelachse verlaufende Ausnehmungen in Form von Längsnuten auf. Diese sind im Spritzgussverfahren mit Lagerstrukturen ausgespritzt, die in radialer Richtung über die Ankerumfangsfläche abstehende Kunststoffstege bilden. Mit den Lagerstrukturen gelangt der Anker an der zylindrischen Innenfläche der Ankerführung zur Anlage, so dass für ihn ein Gleitlager gebildet ist, welches es dem Anker ermöglicht, in der Ankerführung in axialer Richtung zu gleiten, wobei Gleitreibung entsteht. In diesem Dokument wird auch vorgeschlagen, für die Gleitlagerung des Ankers statt der Längsnuten zwei Ausnehmungen in Form von Ringnuten in die Ankerumfangsfläche einzubringen und mit ringförmigen Lagerstrukturen aus Kunststoff ebenfalls auszuspritzen, die jeweils einen über die Ankerumfangsfläche hinaus überstehenden Kunststoffring bilden.

### Aufgabe der Erfindung

Aufgabe der Erfindung ist es daher, das bekannte elektromagnetische Schaltventil dahingehend zu verbessern, dass die Schaltzeiten erheblich verkürzt werden und dies auch in einem großen Temperaturbereich, dass die Reibung zwischen Magnetanker und Hülse verringert wird und dass die radiale magnetische Kraft und der magnetische Widerstand minimiert werden.

### Zusammenfassung der Erfindung

Die Aufgabe der Erfindung wird dadurch gelöst, dass der Außenumfang des Magnetankers über seine gesamte axiale Länge verlaufende Segmente mit zur Mittelachse unterschiedlichen Radien und Umfangswinkeln aufweist. Die Kanäle sind dabei in vorteilhafter Weise konzentrisch zur Mittelachse im Magnetanker verteilt angeordnet, wobei die Anordnung vorzugsweise auf demselben Radius zur Mittelachse erfolgt und eine gleichmäßige Verteilung vorgesehen ist. Durch diese Ausgestaltung und die größere Anzahl der Kanäle wird die Bremswirkung der Dämpfung durch Verschiebung des Mediums auf beiden Seiten des Magnetkörpers minimiert.

Da der Ankerraum vorzugsweise mit Öl gefüllt ist, wird durch die Anzahl und Größe der Kanäle eine schnelle Ölweiterleitung von einer zur anderen Seite des Magnetankers erreicht. Dabei ist die Abstimmung von großer Bedeutung, weil eine Vergrößerung der Anzahl und des Querschnitts der Kanäle zwar eine Verkleinerung der Reibung des zu verschiebenden Mediums bewirkt, andererseits aber eine Verkleinerung der magnetischen Kraft im Magnetanker zur Folge hat. Es hat sich gezeigt, dass fünf Kanäle, die gleichmäßig über den Umfang verteilt sind, ein guter Kompromiss sind, wobei ein kreiszylindrischer Querschnitt mit einem Radius R₃ optimal ist, wenn der Radius zwischen 0,05 und 0,7 des Radius R₁, der der maximale Radius des Magnetankers auf seinem Außenumfang darstellt, vorgesehen ist.

Zur Optimierung des Außenumfangs des Magnetankers wird erfindungsgemäß vorgeschlagen, dass Segmente mit unterschiedlichen Radien zur Mittelachse vorgesehen sind, wobei die Segmente einen Radius R₁ und R₂ haben. Der Umfangswinkel der Segmente entspricht ϕ₁ und ϕ₂. Als sehr günstig für die Reibung zwischen Magnetanker und Hülse hat sich herausgestellt, wenn die Radien R₁ und R₂ zueinander die Vorgabe R₂ ≥ 0,8 R₁ als Vorgabe erfüllen. Die Umfangswinkel sollen folgende Vorgaben erfüllen: 1° ≤ ϕ₁ + ϕ₂ ≤ 120° und 0,1 ≤ ϕ₁: ϕ₂ ≤ 10.

Insgesamt ergibt sich durch den erfindungsgemäßen Vorschlag der Vorteil, dass sowohl die Reibung zwischen Magnetanker und Hülse als auch die Dämpfungskraft verkleinert werden und eine günstige Verteilung der radialen magnetischen Kraft vorliegt, die zu einer Verkleinerung der Projektion der radialen magnetischen Kraft führt. Mit dem erfindungsgemäßen elektromagnetischen Schaltventil werden Schaltzeigen von ca. 1,6 Millisekunden bei 100°C erreicht. Dies trifft insbesondere auch zu bei niedrigen Temperaturen bis - 30°C.

### Kurze Beschreibung der Zeichnungen

Zur weiteren Erläuterung der Erfindung wird auf die Zeichnungen verwiesen, in denen ein Ausführungsbeispiel der Erfindung vereinfacht dargestellt ist. Es zeigen:
- Figur 1: einen Längsschnitt durch ein schematisch dargestelltes e- lektromagnetisches Schaltventil gemäß dem Schnitt II - II in Figur 2 und
- Figur 2: einen Magnetanker des Schaltventils im Querschnitt.

### Detaillierte Beschreibung der Zeichnungen

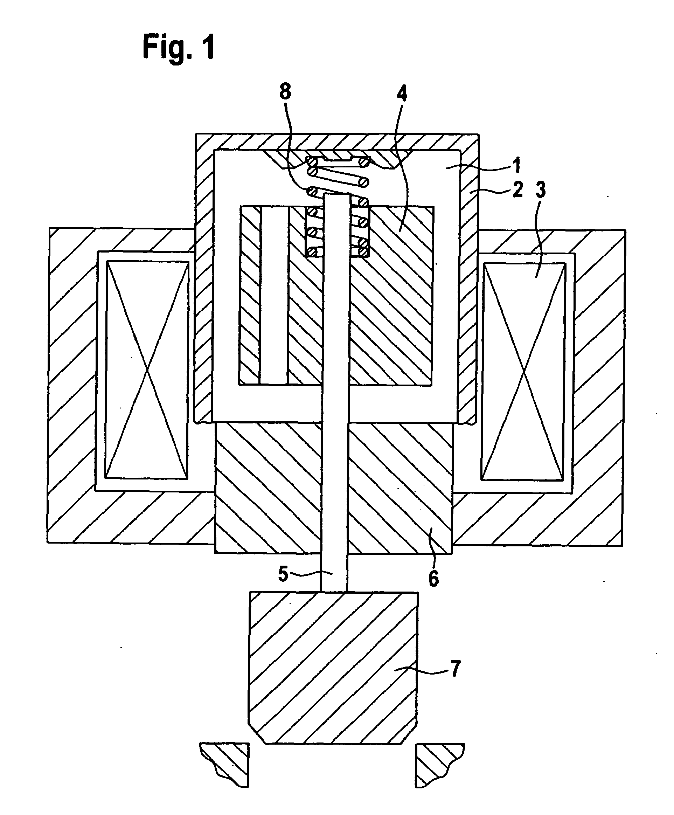

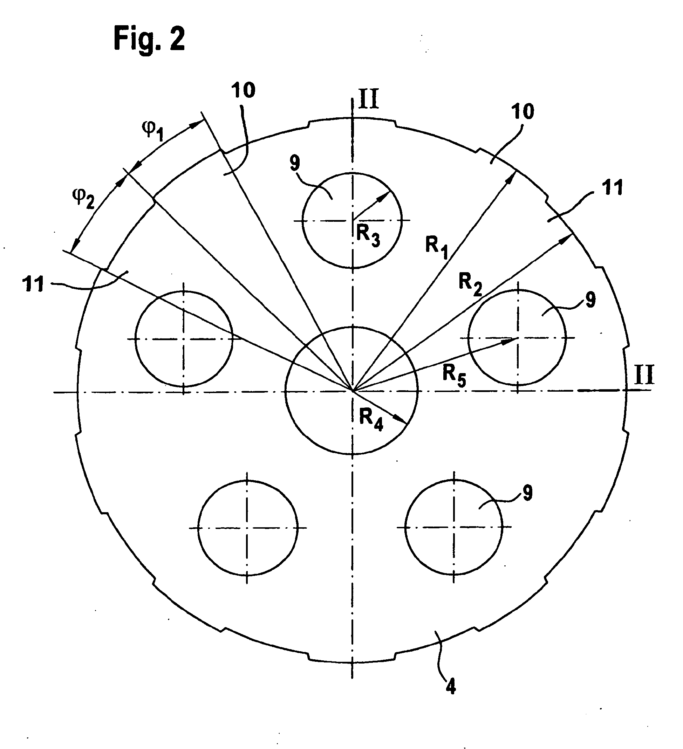

In Figuren 1 und 2 ist, soweit im Einzelnen dargestellt, mit 1 ein Ankerraum bezeichnet, der von einer Hülse 2 umgeben ist. Um die Hülse 2 herum ist ein mit 3 bezeichneter Elektromagnet angeordnet. In dem Ankerraum 1 ist ein mit 4 bezeichneter Magnetanker eingebaut, der mit einem Stößel 5 in Verbindung steht. Der Stößel 5 durchdringt ein mit 6 bezeichnetes Ventilgehäuse, wobei der Stößel auf der dem Ventilgehäuse 6 abgewandten Seite mit einem Ventilkörper 7 verbunden ist, der nur skizziert dargestellt und einem Ventilsitz benachbart ist.
Auf der dem Ventilgehäuse 6 abgewandten Seite des Magnetankers 4 ist eine mit 8 bezeichnete Druckfeder eingebaut, die sich am Magnetanker 4 und an einem Deckel der Hülse 2 abstützt.

Wie insbesondere Figur 2 zu entnehmen ist, weist der Magnetanker 4 zusätzlich zu der zentralen Bohrung für den Stößel 5 fünf Kanäle 9 auf, die gleichmäßig verteilt auf einem Radius R₅ angeordnet sind. Die Kanäle 9 sind als Bohrungen mit dem Radius R₃ ausgeführt. In dem Ausführungsbeispiel beträgt R₃ = 1,00 mm und Radius R₅ = 3,50 mm. Am Außenumfang des Magnetankers 4 sind Segmente 10 und 11 vorgesehen, die auf einem Radius R₁ und R₂ liegen. Im Ausführungsbeispiel beträgt der Radius R₁ = 5,74 mm, wobei R₂ = 5,49 mm misst. Der Umfang der Segmente misst im Ausführungsbeispiel ϕ₁ = 20° Winkel und ϕ₂ = 16° Winkel.

Durch diese Ausgestaltung der Erfindung kann ein minimaler Abstand oder Spalt zwischen dem Radius R₁ bzw. dem Durchmesser 2 R₁ zur Hülse 2 eingestellt werden, so dass eine sehr gute Führung des Magnetankers 4 in der Hülse 2 gegeben ist und sich gleichzeitig durch die Segmente eine geringe Reibung ergibt. Es erfolgt ein schneller Austausch des Öls von der einen Magnetankerseite zur anderen durch die fünf im Einzelnen definierten Kanäle.

### Bezugszeichenliste

- 1: Ankerraum
- 2: Hülse
- 3: Elektromagnet
- 4: Magnetanker
- 5: Stößel
- 6: Ventilgehäuse
- 7: Ventilkörper
- 8: Druckfeder
- 9: Kanäle
- 10: Segmente
- 11: Segmente

## Patentansprüche

1. Elektromagnetisches Schaltventil mit einem von einer Hülse (2) umgebenen Ankerraum (1), mit einem im Ankerraum (1) mittels eines radialen Spiels angeordneten beweglichen Magnetanker (4) mit kreiszylindrischem Querschnitt, der mit einem Elektromagneten (3) in Wirkverbindung steht und mittels eines Stößels (5) mit einem in einem Ventilraum angeordneten Ventilkörper (7) verbunden ist, und mit einer Druckfeder (8), deren Kraft den Ventilkörper (7) in Schließstellung belastet, wobei im Magnetanker (4) verteilt mehrere exzentrisch angeordnete Kanäle (9) vorgesehen sind, die den Magnetanker (4) durchdringen, **dadurch gekennzeichnet, dass** der Außenumfang des Magnetankers (4) über seine gesamte axiale Länge verlaufende Segmente (10, 11) mit zur Mittelachse unterschiedlichen Radien R₁ und R₂ und den Umfangswinkeln ϕ₁ und ϕ₂ aufweist.

2. Elektromagnetisches Schaltventil nach Anspruch 1, **dadurch gekennzeichnet, dass** die Segmente (10, 11) gleichmäßig über den Umfang verteilt sind und sich fortlaufend abwechseln.

3. Elektromagnetisches Schaltventil nach einem der vorhergehenden Ansprüche, **dadurch gekennzeichnet, dass** das Verhältnis der Radien R₁ und R₂ zueinander der Vorgabe R₂ ≥ 0,8 R₁ folgt.

4. Elektromagnetisches Schaltventil nach einem der vorhergehenden Ansprüche, **dadurch gekennzeichnet, dass** die Größe und Beziehung der Umfangswinkel den Vorgaben folgt:
1° ≤ ϕ₁ + ϕ₂ ≤ 120° und 0,1 ≤ ϕ₁ : ϕ₂ ≤ 10.

5. Elektromagnetisches Schaltventil nach einem der vorhergehenden Ansprüche, **dadurch gekennzeichnet, dass** die Kanäle (9) einen kreiszylindrischen Querschnitt mit dem Radius R₃ aufweisen.

6. Elektromagnetisches Schaltventil nach Anspruch 5, **dadurch gekennzeichnet, dass** das Verhältnis der Durchmesser der Kanäle (9) zur der Anzahl der Kanäle (9) lautet:
1 ≤ Nr ≤ floor ≤ [0,9 π (R₂/R₃-1)],
wobei der Ausdruck "floor" die größte natürliche Zahl angibt, die kleiner ist als der Ausdruck in der Klammer und "Nr" die Anzahl der Kanäle (9) angibt.

7. Elektromagnetisches Schaltventil nach einem der vorhergehenden Ansprüche, **dadurch gekennzeichnet, dass** der Ankerraum (1) mit Öl befüllt ist.

## Claims

1. Electromagnetic switching valve having an armature space (1) which is surrounded by a sleeve (2), having a moving magnet armature (4) which is arranged in the armature space (1) by means of radial play and has a circular-cylindrical cross section and is operatively connected to an electromagnet (3) and is connected to a valve body (7), which is arranged in a valve space, by means of a tappet (5), and having a compression spring (8) whose force loads the valve body (7) in the closed position, with a plurality of eccentrically arranged channels (9) being provided in a manner distributed in the magnet armature (4) and passing through the magnet armature (4), **characterized in that** the outer circumference of the magnet armature (4) has segments (10, 11) which run over the entire axial length of said magnet armature and have radii R₁ and R₂, which differ from the centre axis, and the circumferential angles ϕ₁ and ϕ₂.

2. Electromagnetic switching valve according to Claim 1, **characterized in that** the segments (10, 11) are distributed uniformly over the circumference and alternate continuously.

3. Electromagnetic switching valve according to one of the preceding claims, **characterized in that** the ratio of the radii R₁ and R₂ to one another follows the prespecification R₂ ≥ 0.8 R₁.

4. Electromagnetic switching valve according to one of the preceding claims, **characterized in that** the magnitude of and the relationship between the circumferential angles follows the prespecifications:
1° ≤ ϕ₁ + ϕ₂ ≤ 120° and 0,1 ≤ ϕ₁ : ϕ₂ ≤ 10.

5. Electromagnetic switching valve according to one of the preceding claims, **characterized in that** the channels (9) have a circular-cylindrical cross section with the radius R₃.

6. Electromagnetic switching valve according to Claim 5, **characterized in that** the ratio of the diameter of the channels (9) to the number of channels (9) is:
1 ≤ No. ≤ floor ≤ [0,9 π (R₂/R₃-1)],
where the expression "floor" indicates the largest natural number which is lower than the expression in brackets, and "No." indicates the number of channels (9).

7. Electromagnetic switching valve according to one of the preceding claims, **characterized in that** the armature space (1) is filled with oil.

## Revendications

1. Soupape de commutation électromagnétique, comprenant un espace d'armature (1) entouré par une douille (2), une armature magnétique déplaçable (4) de section transversale cylindrique circulaire disposée dans l'espace d'armature (1) au moyen d'un jeu radial, qui est en liaison fonctionnelle avec un électroaimant (3) et qui est connectée au moyen d'un poussoir (5) à un corps de soupape (7) disposé dans un espace de soupape, et un ressort de pression (8) dont la force sollicite le corps de soupape (7) dans la position de fermeture, plusieurs canaux (9) disposés de manière excentrique étant répartis dans l'armature magnétique (4) et traversant l'armature magnétique (4), **caractérisée en ce que** la périphérie extérieure de l'armature magnétique (4) présente des segments (10, 11) s'étendant sur toute sa longueur axiale avec des rayons R₁ et R₂ différents par rapport à l'axe médian et les angles périphériques ϕ₁ et ϕ₂.

2. Soupape de commutation électromagnétique selon la revendication 1, **caractérisée en ce que** les segments (10, 11) sont répartis uniformément sur la périphérie et alternent de manière continue.

3. Soupape de commutation électromagnétique selon l'une quelconque des revendications précédentes, **caractérisée en ce que** le rapport entre les rayons R₁ et R₂ est soumis à l'exigence préalable que R₂ ≥ 0,8 R₁.

4. Soupape de commutation électromagnétique selon l'une quelconque des revendications précédentes, **caractérisée en ce que** l'amplitude et le rapport de l'angle périphérique est soumis à l'exigence préalable :
1° ≤ ϕ₁ + ϕ₂ ≤ 120° et 0,1 ≤ ϕ₁ : ϕ₂ ≤ 10.

5. Soupape de commutation électromagnétique selon l'une quelconque des revendications précédentes, **caractérisée en ce que** les canaux (9) présentent une section transversale cylindrique circulaire de rayon R₃.

6. Soupape de commutation électromagnétique selon la revendication 5, **caractérisée en ce que** le rapport du diamètre des canaux (9) au nombre des canaux (9) est comme suit :
1 ≤ Nb ≤ sol ≤ [0,9 π (R₂/R₃-1)],
l'expression "sol" signifiant le nombre naturel le plus grand qui est inférieur à l'expression entre parenthèses et "Nb" indiquant le nombre de canaux (9).

7. Soupape de commutation électromagnétique selon l'une quelconque des revendications précédentes, **caractérisée en ce que** l'espace d'armature (1) est rempli d'huile.
